(19) Europäisches Patentamt
European Patent Office
Office européen des brevets

(11) **EP 4 311 698 A1**

(12) **EUROPEAN PATENT APPLICATION**

(43) Date of publication:
**31.01.2024 Bulletin 2024/05**

(21) Application number: 23187721.8

(22) Date of filing: **26.07.2023**

(51) International Patent Classification (IPC):
*B60G 17/016* (2006.01)     *G01G 19/08* (2006.01)

(52) Cooperative Patent Classification (CPC):
**B60G 17/0162; G01G 19/08;** B60G 2300/04;
B60G 2400/104; B60G 2400/20; B60G 2400/33;
B60G 2400/50; B60G 2400/60; B60G 2400/61;
B60G 2400/63; B60G 2800/0124; B60G 2800/21;
B60G 2800/70; B60W 40/13; B60W 2040/1307

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 GB 202210999**

(71) Applicant: **Continental Automotive Technologies
GmbH
30165 Hannover (DE)**

(72) Inventors:
• **Y P, Nithin
339780 Singapore (SG)**
• **Gopinath, Anjana
339780 Singapore (SG)**

(74) Representative: **Continental Corporation
c/o Continental Automotive Technologies GmbH
Intellectual Property
Guerickestr. 7
60488 Frankfurt am Main (DE)**

(54) **VEHICLE LOAD REGULATING SYSTEM AND METHOD THEREOF**

(57)     This disclosure relates to a method of regulating a vehicle load of a motor vehicle. The method comprising: measuring, by way of a sensing module, an onboard loading data of a motor vehicle; transmitting, by way of a vehicle bus, the onboard loading data measured to a processing unit of a motor vehicle load regulating system; receiving, by way of a processing unit, the onboard loading data measured; and determining, by way of a processing unit, a centrifugal force of a motor vehicle relative to the onboard loading data measure, characterized by that the method further comprises: executing, by way of the processing unit, a feedback mechanism for regulating a motion of a motor vehicle in response to the centrifugal force determined. A vehicle load regulating system, a computer program and computer-readable medium having stored thereon the computer program is also disclosed.

FIG. 1

**EP 4 311 698 A1**

## Description

### Technical Field

This disclosure relates to a vehicle load regulating system, and specifically the vehicle load regulating system uses measurement of vehicle load and movement of vehicle to provide a feedback to the vehicle load regulating system.

### Background

Commercial vehicles are used for transporting goods from one location to another location. Very often, safety issue is a major concern for commercial vehicle operators who are drowsy and fatigue from driving. In addition, hazards caused by overloading or uneven loading of cargo on commercial vehicle trucks may also endanger the operator.

A known method for monitoring overload uses sensors to monitor height of commercial vehicle bed with respect to the suspension of the commercial vehicle, to determine overload or underload in real time. In such methods, the sensors are usually mounted on vehicle suspension system or air-spring system to monitor height of commercial vehicle.

A main drawback of such overload monitoring system is that measurement of height of commercial vehicle bed which may be inaccurate due to uneven loading of truck bed. Other issues undetectable uneven distribution of load due to movement of cargo on commercial vehicle bed while traveling. In addition, effects of centrifugal force caused by commercial vehicle carrying overload traveling on highway curves, road bends or turns which may cause fishtailing or jack knifing cannot be addressed using conventional method of measurement of height of commercial vehicle bed per se. Load movement in commercial vehicle may also lead to fatal accidents vehicle is travelling at high speed, endangering both the operator of the commercial vehicle and other road users.

There is therefore a need to provide a motor vehicle load regulating system that overcomes, or at least ameliorates, the problems described above. Furthermore, other desirable features and characteristics will become apparent from the subsequent detailed description and the appended claims, taking in conjunction with the accompanying drawings and this background of the disclosure.

### Summary

A purpose of this disclosure is to ameliorate the problem of vehicle overturning due to motor vehicle overloading or uneven loading by providing the subject-matter of the independent claims.

Further purposes of this disclosure are set out in the accompanying dependent claims.

The objective of this disclosure is solved by a method of regulating a vehicle load of a motor vehicle, the method comprising:

measuring, by way of sensing module, an onboard loading data of a motor vehicle;
transmitting, by way of a vehicle bus, the onboard loading data measured to a processing unit of a motor vehicle load regulating system;
receiving, by way of a processing unit, the onboard loading data measured;
and
determining, by way of a processing unit, a centrifugal force of a motor vehicle relative to the onboard loading data measure,
characterized by that the method further comprises:
executing, by way of the processing unit, a feedback mechanism for regulating a motion of a motor vehicle in response to the centrifugal force determined.

An advantage of the above described aspect of this disclosure yields a method of regulating a vehicle load of a motor vehicle through calculation of a centrifugal force, by measuring various aspects of onboard load condition of the motor vehicle and providing the information to the vehicle load regulating system through a closed-loop feedback system, to avoid vehicle overturning. More advantageously, fishtailing or jack knifing may be avoided.

Preferred is a method as described above or as described above as being preferred, in which the method further comprises:
monitoring, by way of the sensing module, the onboard loading data relative to a change in an amount of pressure pressing on a floor of a trailer compartment of the motor vehicle.

The advantage of the above aspect of this disclosure is to measure potential changes to pressure pressing against a floor of a trailer compartment of a motor vehicle, to achieve monitoring movement of vehicle load.

Preferred is a method as described above or as described above as being preferred, in which the method further comprises:

determining, by way of the processing unit, a weight of load within the trailer compartment of the motor vehicle.

The advantage of the above aspect of this disclosure is to determine a weight of load within the trailer compartment in accordance with the change in pressure measured. More advantageously, the weight of load determined may be used as a parameter to determine whether the trailer is poorly loaded, for example overloaded, underloaded or unevenly loaded across a horizontal axis of the trailer compartment.

Preferred is a method as described above or as described above as being preferred, in which the method further comprises:

monitoring, by way of the sensing module, the onboard loading data relative to at least two contact points pressing on the floor of the trailer compartment of the motor vehicle.

The advantage of the above aspect of this disclosure is to utilize the sensing module to monitor two or more contact points pressing on the floor of the trailer compartment, to monitor movement of vehicle load.

Preferred is a method as described above or as described above as being preferred, in which the method further comprises:

determining, by way of the processing unit, a location of load within the trailer compartment of the motor vehicle.

The advantage of the above aspect of this disclosure is to determine or identify a location of load within the trailer compartment in response to the measurement of pressure contact points. Advantageously, this parameter assists to identify potential uneven loading of a commercial vehicle, especially when the commercial vehicle is travelling on road.

Preferred is a method as described above or as described above as being preferred, in which the method further comprises:

in response to the weight of load determined, the method further comprises:
determining, by way of the processing unit, a frictional force of one or more tires of the motor vehicle.

The advantage of the above aspect of this disclosure is to calculate a frictional force of the commercial vehicle. The frictional force of the commercial vehicle equates to the centripetal force of the commercial vehicle. In this sense, the calculation of the frictional force is preferably done after the step of determining the weight of load. More advantageously, determining the frictional force avoid fishtailing or jack knifing when the commercial vehicle is travelling at high speed, along a curved path.

Preferred is a method as described above or as described above as being preferred, in which the method further comprises:

monitoring, by way of a steering angle sensor, a radius of a turning curve of the motor vehicle.

The advantage of the above aspect of this disclosure is to monitor a radius of a turning curve of the commercial vehicle, such that this parameter may be used for determining effect of centrifugal force, to avoid vehicle overturning.

Preferred is a method as described above or as described above as being preferred, in which the method further comprises:

notifying an operator of a load condition of the motor vehicle in response to measurement of load reaching a predetermined load limit.

The advantage of the above aspect of this disclosure is to alert the operator in the event that an overload detection, i.e. a measured weight of load exceeds a predetermined axel limit.

Preferred is a method as described above or as described above as being preferred, in which:
the feedback mechanism comprises:

the weight of load within the trailer compartment determined by the processing unit;
the location of load within the trailer compartment determined by the processing unit; and
the movement of the load within the trailer compartment determined by the processing unit;
the frictional force of one or more tires of the motor vehicle; and the radius of a turning curve of the motor vehicle.

The advantage of the above aspect of this disclosure is to determine a centrifugal force of the commercial truck, thereby achieving the objective of providing a negative feedback to the vehicle load regulating system.

Preferred is a method as described above or as described above as being preferred, in which:
regulating the vehicle load of a motor vehicle in response to the centrifugal force determined further comprises:

transmitting, by way of the processing unit, the feedback mechanism to an anti-lock braking system;
transmitting, by way of the processing unit, the feedback mechanism to a throttle control system,

or combination thereof.

The advantage of the above aspect of this disclosure is to regulate the vehicle speed through an anti-locking brake system and/or a throttle system, to ensure safety of an operator of a commercial vehicle.

The objective of this disclosure is solved by a motor vehicle load regulating system comprising:

a sensing module operable to measure an onboard loading data of a motor vehicle; and
a processing unit comprising:
an algorithm operable to determine a centrifugal force of a motor vehicle using the onboard loading data measured,

characterized in that:
the processing unit is further operable to execute a feedback mechanism to a vehicle regulating to regulate a motion of a motor vehicle.

An advantage of the above described aspect of this disclosure yields a vehicle load regulating system, through calculation of a centrifugal force, by measuring various aspects of onboard load condition of the motor vehicle and providing the information to the vehicle load regulating system through a closed-loop feedback system, to avoid vehicle overturning. More advantageously, fishtailing or jack knifing may be avoided.

Preferred is a system as described above or as described above as being preferred, in which:
the sensing module comprises at least one pressure sensor.

The advantage of the above aspect of this disclosure is to utilize one or more pressure sensors to measure or monitor changes in pressure, changes in location and/or movement of load within a trailer compartment of a commercial vehicle.

Preferred is a system as described above or as described above as being preferred, in which:
the at least one pressure sensor is an air-filled tube sensor.

In one embodiment, the one or more pressure sensor may be an air-filed tube sensor which detects pressure. An example of such an air-filled tube sensor may be Continental's Pressure based Pedestrian Protection System PPS pSAT™.

Preferred is a system as described above or as described above as being preferred, in which:
the at least one pressure sensor is a force sensitive resistor (FSR) mat.

In one embodiment, the one or more pressure sensor may be force sensitive resistor mat.

Preferred is a system as described above or as described above as being preferred, in which:
the sensing module is embedded within a floor of a trailer compartment.

The advantage of the above aspect of this disclosure is to monitor a weight of load, a location of load and a movement of load of along a horizontal axis of a trailer compartment of a commercial vehicle, to determine a centrifugal force, thereby achieving the objective of avoiding fishtailing or jack knifing when travelling at high speed along a curved path.

Preferred is a system as described above or as described above as being preferred, in which:
the onboard loading data comprises:

a change in an amount of pressure pressing on a floor of a trailer compartment of the motor vehicle;
at least two contact points pressing on the floor of the trailer compartment of the motor vehicle; and
a movement of load within the trailer compartment of the motor vehicle.

The advantage of the above aspect of this disclosure is to determine a load condition of a commercial vehicle, specifically overload condition, underload condition or uneven load distribution across a floor of a trailer compartment of a commercial vehicle. The load condition may be used as parameters for calculation of centrifugal force when the commercial vehicle is travelling at high speed along a curved path. More advantageously, the centrifugal force calculated may be use as a feedback mechanism to regulate vehicle speed.

Preferred is a system as described above or as described above as being preferred, in which:
the vehicle load regulating system further comprises:

an anti-lock braking system;
a throttle control system,

or combination thereof.

The advantage of the above aspect of this disclosure is to provide a vehicle load regulating system having a feedback mechanism to the anti-locking brake system and/or the throttle system, to ensure safety of an operator of a commercial vehicle.

The objective of this disclosure is solved by a computer program comprising instructions to cause the system as disclosed herein to execute the steps as disclosed herein.

An advantage of the above described aspect of this disclosure yields computer program product for calculation of a centrifugal force, by measuring various aspects of onboard load condition of the motor vehicle and providing the information to the vehicle load regulating system to avoid vehicle overturning. More advantageously, fishtailing or jack knifing may be avoided.

The objective of this disclosure is solved by a computer-readable medium having stored thereon the computer program as disclosed herein.

An advantage of the above described aspect of this disclosure yields computer program product for calculation of a centrifugal force, by measuring various aspects of onboard load condition of the motor vehicle and providing the information to the vehicle load regulating system. More advantageously, fishtailing or jack knifing may be avoided.

**Brief Description of Drawings**

Other objects and aspects of this disclosure will become apparent from the following description of embodiments with reference to the accompanying drawings in which:

FIG. 1 shows a system block diagram of a vehicle load regulating system in accordance with an embodiment.

FIG. 2a-c shows a sensing module in accordance with an embodiment.

FIG. 2d shows a sensing module in accordance with an embodiment.

FIG. 3a - 3b shows a sensing module placement and simulation of a location of load within a commercial vehicle in accordance with an embodiment.

FIG. 4 shows a sensing module placement within a commercial vehicle in accordance with an embodiment.

FIG. 5 shows a detection of a movement of load within a commercial vehicle in accordance with an embodiment.

FIG. 6 shows a flowchart for a method of regulating vehicle load in accordance with an embodiment.

In various embodiments described by reference to the above figures, like reference signs refer to like components in several perspective views and/or configurations.

**Detailed Description**

The following detailed description is merely exemplary in nature and is not intended to limit the disclosure or the application and uses of the disclosure. Furthermore, there is no intention to be bound by any theory presented in the preceding background of the disclosure or the following detailed description. It is the intent of this disclosure to present a vehicle load regulating system and method thereof.

Hereinafter, the term "processing unit" used herein may broadly encompass a general-purpose processor, a central processing unit (CPU), a microprocessor, a digital signal processor (DSP), a controller, a microcontroller, a state machine, and so forth. Under some circumstances, a "processing unit" may refer to an application specific integrated circuit (ASIC), a programmable logic device (PLD), a field programmable gate array (FPGA), etc. The term "processing unit" may refer to a combination of processing devices, e.g., a combination of a DSP and a microprocessor, a plurality of microprocessors, one or more microprocessors in conjunction with a DSP core, or any other such configuration. The "processing unit" may include a memory, for loading a sequence of instruction, causing the "processing unit" to perform steps of actions. The term "memory" should be interpreted broadly to encompass any electronic component capable of storing electronic information. The term "memory" may refer to various types of processor-readable media such as random access memory (RAM), read-only memory (ROM), non-volatile random access memory (NVRAM), programmable read-only memory (PROM), erasable programmable read only memory (EPROM), electrically erasable PROM (EEPROM), flash memory, magnetic or optical data storage, registers, etc. "Memory" is said to be in electronic communication with a processor if the processor can read information from and/or write information to the memory. Memory that is integral to a processor is in electronic communication with the processor. Henceforth, the term "processing unit" may also be taken to encompass "system on chip" (SoC) which uses a single integrated circuit (IC) chip that contains multiple resources, computational units, processors and/or cores integrated on a single substrate. A single SOC may contain circuitry for digital, analog, mixed-signal, and radio-frequency functions, as well as any number of general purpose and/or specialized processors (digital signal processors, modem processors, video processors, etc.), memory blocks (e.g., ROM, RAM, Flash, etc.). Unless otherwise specifically stated, the "processing unit" is not limited to any specific combination of hardware circuitry and software, nor to any particular source for the instructions executed by the processing unit.

The term "first", "second", "third" and the like used in the context of this disclosure may refer to modification of different elements in accordance with various exemplary embodiments, but not limited thereto. The expressions may be used to distinguish one element from another element, regardless of sequence of importance. By way of an example, "a first pressure sensor" and "a second pressure sensor" may indicate different pressure sensors regardless of order or importance. On a similar note, a first pressure sensor may be referred to as the second pressure sensor and vice versa without departing from the scope of this disclosure.

## System Configuration

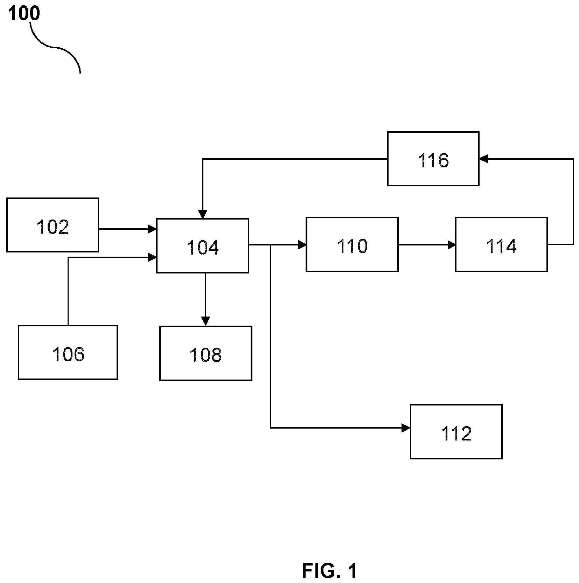

FIG. 1 of the accompanying drawings shows a system block diagram of a vehicle load regulating system 100. The system 100 comprises a sensing module 102 and a processing unit 104. The sensing module 102 is operable to measure an onboard loading data of a motor vehicle. The term "onboard loading data" shall refer to information relating to a vehicle load onboard a motor vehicle. The parameters may include amongst others, a weight of load, a movement of load, a location of load onboard a motor, but not limited thereto.

The system 100 may further comprises an accelerator sensor 106, to monitor vehicle speed when the motor vehicle is travelling. A centrifugal force acting on a horizontal axis of the motor vehicle may be measured using accelerator sensor 106 mounted on either side of the motor vehicle. A steering angle sensor (not shown) may be used to monitor a radius of a turning curve of the motor vehicle when the motor vehicle is travelling along a curved path.

The system 100 may further comprises a human machine interface (HMI) module 108 for notifying an operator when a load condition of the motor vehicle reaches a pre-determined load limit, i.e. a vehicle overload condition. The pre-determined load limit may be a maximum vehicle load determined by factory configuration when manufacturing the motor vehicle. The HMI module 108 may include a display for displaying the load condition to the operator, or a voice activated function for notifying the load condition to the operator. In the event a vehicle overload condition is detection, the information may be stored in the processing unit 104 for future reference.

Optionally, the system 100 may be in communication with an engine system 114, a wheel speed sensor 1106, a throttle unit 110 and an anti-locking brake system (ABS) 112 of the motor vehicle. An advantage of the aforesaid configuration is to prevent vehicle overturning during operation of the motor vehicle, in the event poor vehicle load condition is determined by the processing unit 104. The transmission of information measured or monitored by the sensing module 102 to the processing unit 104 and to other sub-system or modules onboard the motor vehicle may be carried out by a communication network protocol, such as a vehicle bus. Types of suitable vehicle bus includes Controller Area Network (CAN), Local Interconnect Network (LIN) and FlexRay, but not limited thereto.

## Sensing Module 102

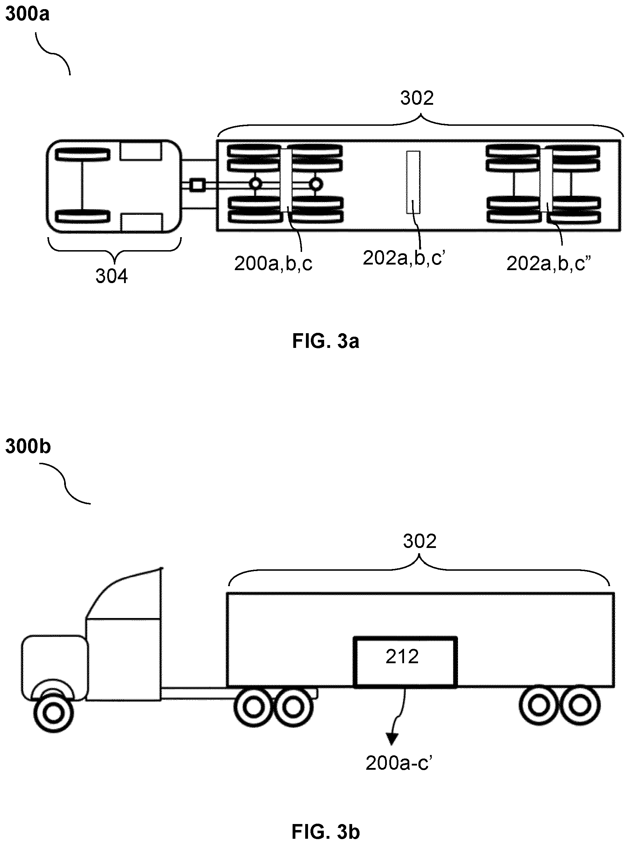

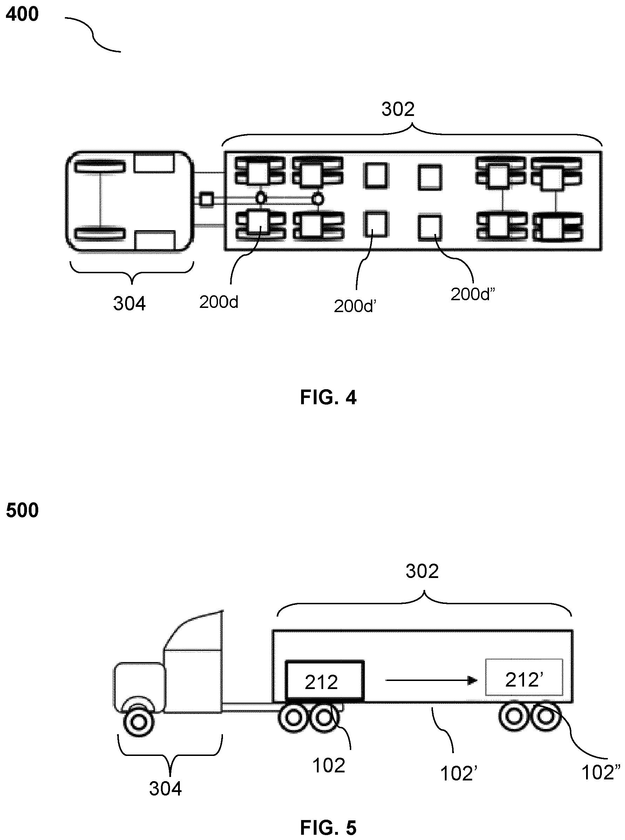

The sensing module 102 may be embedded within a floor of a trailer compartment of a motor vehicle, for sensing an amount of pressure pressing against the floor of the trailer compartment, as shown in FIG. 3a-3b or FIG. 4a - 4b. The measurement of an amount of pressure pressing against the floor of the trailer compartment is transmitted to the processing unit 104, of which in response to the information on the pressure amount measured, the processing unit 104 determines a weight of load onboard the trailer compartment.

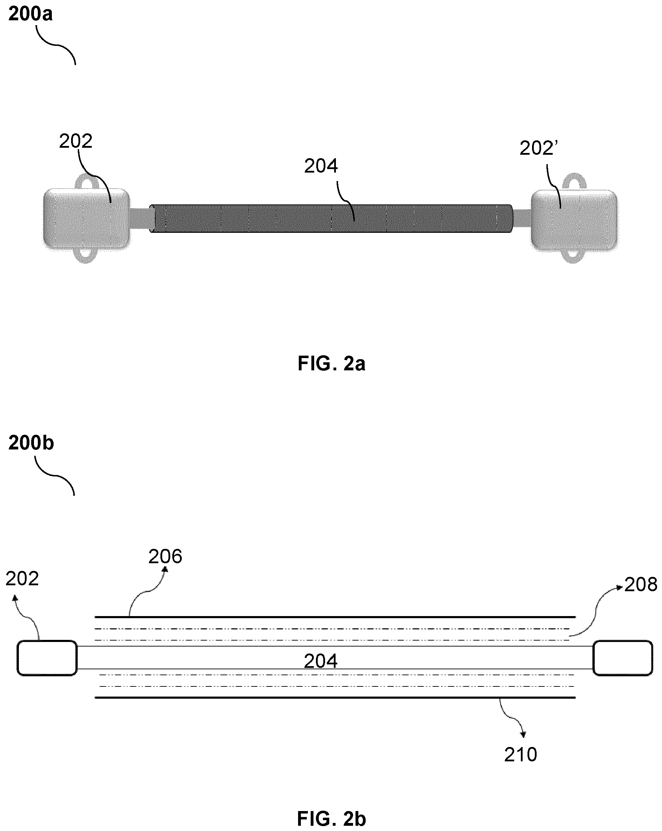

In one embodiment, the sensing module 102 comprises an air-filled tube pressure sensor 200a, as shown in FIG. 2a. The air-filled tube pressure sensor 200a comprises an air-filed tube sensor 204 and at least one pressure sensor 202, 202' on each end of the air-filled tube sensor 204. An example of such an air-filled tube sensor may be Continental's Pressure based Pedestrian Protection System PPS pSAT™. Referring to FIG. 2b which shows a cross-section view of an embodiment 200b of an air-filled tube pressure sensor embedded within a floor of trailer compartment, it can be seen that the air-filled tube pressure sensor 204 is arranged across an axis of the floor 210 of the trailer compartment, with a pressure sensor 202, 202' on each end of the air-filled tube pressure sensor 204. Optionally, a buffer layer 208 may be arranged around the air-filled tube pressure sensor 204, for protection against wear and tear. An example of a suitable type of buffer layer may be soft foam. Additional mechanical plate 206 may be placed over the buffer layer 208 to conceal the buffer layer 208 from view.

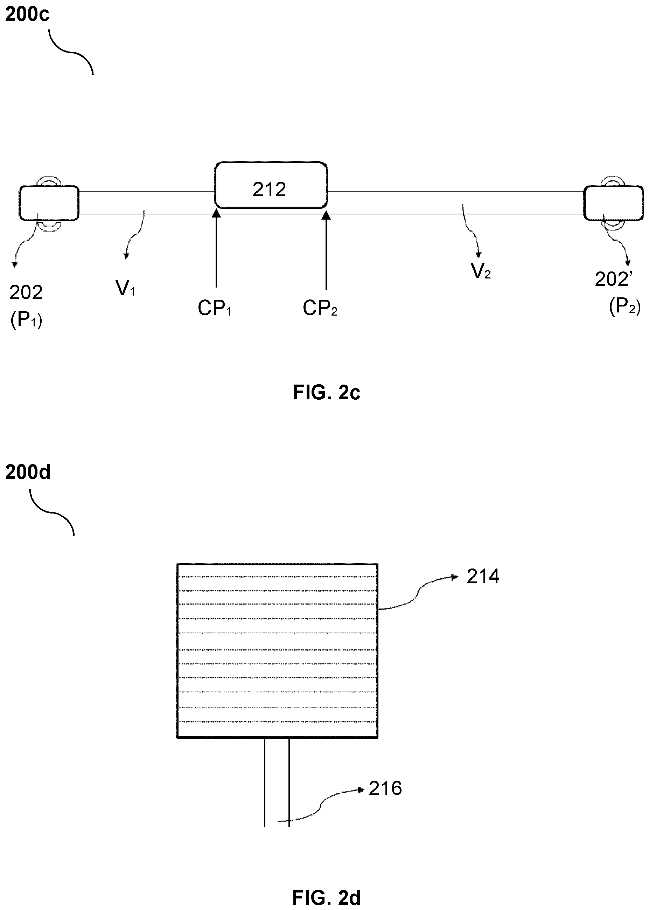

In another embodiment as shown in FIG. 2d, the sensing module 102 comprises force sensitive resistor (FSR) mats, which may be embedded within a floor of the trailer compartment. As shown on FIG. 2d, a FSR mat provides a sensing area 214 for measuring or sensing pressure and sensing pins 216 for connecting to a circuitry.

The sensing module 102 is further operable to monitor at least two contact points $CP_1$, $CP_2$ at least partially pressing on sensing module 102. By way of an example as shown in FIG. 2c, a load 212 has at least two contact points $CP_1$, $CP_2$ pressing against a surface of the air-filled tube pressure sensor 204. Due to a weight of load 212 pressing against the air-filled tube pressure sensor 204, a volume of air, $V_1$ and $V_2$ on the left and right side of the load 212 changes. The information the at least two contact points $CP_1$, $CP_2$ may be transmitted to the processing unit 104 for interpreted as location of load 212.

Referring to the embodiment shown in FIG. 2c, a vehicle load condition is measured and be pre-stored in the processing unit 104. In response to monitoring a change in the at least two contact points, $CP_1$, $CP_2$ when the motor

vehicle is accelerating or in an acceleration mode, the load 212 moves from a first end of the trailer compartment to a second end of the trailer compartment, the pressure sensor 202' sense a decrease in pressure, while the pressure sensor 202 sense an increase in pressure. Consequently, the processing unit 104 interprets a change in location or a movement of the load 212 within the trailer compartment.

For clarity, FIG. 3a illustrates placement of sensing module 102 within a trailer compartment 302 of a motor vehicle 300a. As seen in FIG. 3a, one or more air-filled tube pressure sensors 200a-c may be strategically arranged on an area or a floor of the trailer compartment 302, such that vehicle load 212 or cargo which are loaded onto the floor of the trailer compartment 302 may be sense by the sensing module 102. In this exemplary embodiment, the one or more air-filled tube pressure sensor 200a, 200b, 200c are placed in a front area of the trailer compartment 302, nearest to an operator compartment 304. One or more air-filled tube pressure sensor 200a', 200b', 200c' may be placed in a middle section of the trailer compartment 302, and one or more air-filled tube pressure sensor 200a", 200b", 200c" may be placed at a rear section of the trailer compartment 302. FIG. 3b illustrates a side view of a motor vehicle 300b, with a load 212 placed within a trailer compartment 302 of the motor vehicle. Since the load 212 is placed over the air-filled tube sensor 200a', 200b', 200c', the aforesaid configuration enables measuring, monitoring and/or sensing of changes to vehicle load within the trailer compartment 302.

In another embodiment 400 as shown in FIG. 4, the sensing module 102 comprises one or more FSR mats 200d, 200d' and 200d". Similar to the earlier embodiment disclosed herein, the FSR mats may be arranged at a front end of the trailer compartment 302, nearest to the operator compartment 304. The FSR mats may also be arranged in a middle section of the trailer compartment 302 and at a rear end of the trailer compartment 302. In the event a force is asserted on a subsequent FSR mate, i.e. a change of force from a first FSR mat to a force exerted on a second FSR mat is detected when the motor vehicle is accelerating or in an acceleration mode may be interpreted by the processing unit 104 as a change in location of load 212 or a movement of load 212 within the trailer compartment 302.

FIG. 5 shows a load movement 500 within a commercial vehicle in accordance with an embodiment. In this embodiment, a load 212 is placed near a front end of the trailer compartment 302, i.e. nearest to the operator compartment 304. A weight of load 212 may be measured by the sensing module 102. Presuming during acceleration of the motor vehicle, the load 212 moves from the front end of the trailer compartment 302 to a rear end of the trailer compartment 302, i.e. furthest end away from the operator compartment 304, a change in at least two contact points of the load 212 is thus monitored by the sensing module 102" which is embedded in a floor of the trailer compartment 302. This change contact points CP1, CP2 monitored by the sensing module 102 is in turn transmitted to the processing unit 104 to determine a movement of the load 212 within the trailer compartment 302.

### Processing Unit 104

The processing unit 104 may comprises a computer-readable medium to execute a calculation algorithm (not shown in system diagram) stored on the processing unit 106. The calculation algorithm may be executed to determine a centrifugal force of the motor vehicle based on a set of parameters determined and/or monitored by the sensing module 102, such that the centrifugal force calculated may be used as a feedback mechanism to regulate a motion of the motor vehicle.

The calculation algorithm may include formulas to calculate (1) a weight of load, (2) a location of load, (3) a frictional force of tires, (4) a centrifugal force and/or (5) velocity of a moving motor vehicle carrying a load.

In one embodiment, a weight of load within a trailer compartment 302 may be determined or calculated but the calculation algorithm as follows:

$$Weight\ of\ load\ (W) = \left[\left(\frac{A}{g}\right) * \Sigma P_n(summation\ from\ n = 1\ to\ n)\right],$$

Where

A = area of floor of trailer compartment
g = acceleration due to gravity = 9.8m/s
P = Pressure from individual pressure sensor
n = number of sensors

In one embodiment where air-tube filled sensors are used as sensing device of the sensing module 102, a location of load within a trailer compartment 302 may be determined or calculated but the calculation algorithm as follows:

$$CP_1 = \left(\frac{k}{P_1} * \pi r_1{}^2\right) \& \ CP_2 = \left(\frac{k}{P_2} * \pi r_2{}^2\right)$$

Where

$CP_1$ & $CP_2$ are the position coordinates or contact points of the load
$P_1$ & $P_2$ are the pressure exerted on sensors 202, 202'
$r_1 = r_2 = r$ is the radius of air tube connecting the two pressure sensors

In another embodiment where FSR mats are used as sensing device of the sensing module 102, a total number of FSR mats required (N) may be calculated using the following formulas:
Formula F1,

## N = ((Axle load limit of truck * 9.8) / load measured by individual FSR mat)

The FSR maximum load is greater than load measured by FSR.
Spacing of FSR mat inside the floor of trailer compartment may be determined using formula F2,

## Weight / Area (N/m2 ) = ((Axle load limit of truck * 9.8) / Area of trailer floor)

And formula F3,

## Spacing of FSR mats = ( Area of trailer floor / N )

Where
N =Total number of FSR used
By way of an example, if a motor vehicle has an axle limit of 21 tonnes with a trailer compartment area of 3790m$^2$, the axle load limit in Newtons = 205939.65 N. Max load of FSR = 30000 N. The maximum load of FSR may be obtained from specification of FSR component.
The intended load measured by FSR is 10000 N ( 10000N < 30000 N)
Total no of FSR required(N) = 21 (determined from formula F1)

## Weight/Area = 54 N/m2 (determined using formula F2)

Spacing of FSR mats = 180, which means 1 sensor for 180m2 (Determined using formula F3)
In both embodiment, a minimum velocity with respect to a centrifugal force and within a trailer compartment 302 may be determined or calculated but the calculation algorithm as follows:

## Frictional force ($f_S$) = μ*m*g

Where

μ = coeffient of friction
m = mass of vehicle + load g = 9.8 m/s

Therefore, the centrifugal force may be calculated by the calculation algorithm as follows:

## Centrifugal force($f_C$) = (m*$V_2$ ) / r

Where

m = mass of vehicle + load
V = Velocity of vehicle
r = radius of curvature of turn

Advantageously, the frictional force provides the centripetal force required for the trailer to avoid fishtailing or jack knifing.

Consequently, the minimum velocity required to prevent the motor vehicle from fishtailing or jack knifing may be calculated by the calculation algorithm as follows:

$$V_{min} = \text{sqrt}(\mu * g * r)$$

Where

sqrt = $\sqrt{}$ function $\mu$ = coefficent of friction
g = 9.8m/s
r = radius of curvature of road

In all of the above embodiments, the value of 'r' can be calculated from the steering angle sensor data and steering ratio of a motor vehicle in accordance with factory specification.

## Method

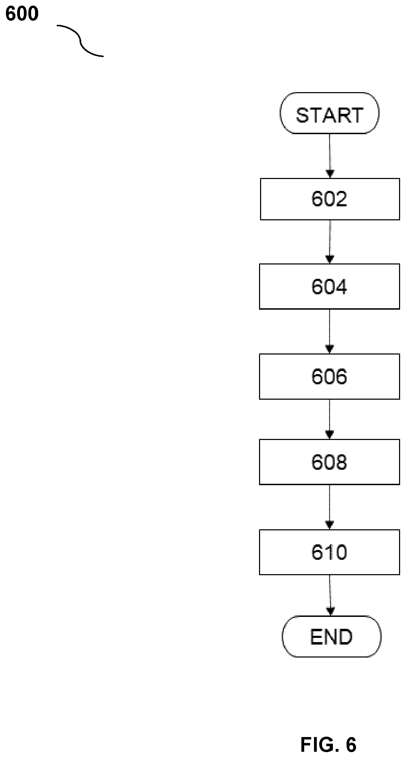

Turning now to FIG. 6 which shows a flowchart 600 for a method of regulating vehicle load in accordance with an embodiment, at step 602, an onboard loading data of a motor vehicle is measured, by way of a sensing module.

In next step 604, the onboarding data measured by the sensing module is transmitted to a motor vehicle load regulating system, for example motor vehicle load regulating system 100 as disclosed herein. In nest step 606, a processing unit of the motor vehicle load regulating system receives the onboard loading data and determines a centrifugal force in accordance with a set of parameters measured and/or calculated by a calculation algorithm stored on the processing unit, at step 608.

In the next step 610, the processing unit executes a feedback mechanism to the vehicle load regulating system, to regulate motion of the motor vehicle.

Optionally, in response to the centrifugal force determined by the processing unit, further steps may be executed, including the step of transmitting the feedback mechanism to an anti-lock braking system.

Optionally, in response to the centrifugal force determined by the processing unit, further steps may be executed, including the step of transmitting the feedback mechanism to a throttle control system.

Optionally, the set of parameters for calculating the centrifugal force may include a step of monitoring the onboard loading data relative to a change in an amount of pressure pressing on a floor of a trailer compartment of the motor vehicle. The amount of pressure measured, by way of the sensing module, may be transmitted to the processing unit for calculating or determining a weight of load withing the trailer compartment.

Optionally, the set of parameters may further comprise a step of monitoring the onboard loading data relative to at least two contact points pressing on the floor of the trailer compartment of the motor vehicle. The location of the at least two contact points pressing on the floor of the trailer compartment as monitored by the sensing module may be transmitted to the processing unit, such that a location of the load on the floor of the trailer compartment may be identified.

Optionally, the set of parameters may further comprise a step of identifying a movement of load within the trailer compartment of the motor vehicle, by measuring a weight of load and/or contact point of the load between a first sensing module and a subsequent sensing module.

Optionally, in response to the weight of load determine, in a next step, the processing unit may determine a frictional force of one or more tires of the motor vehicle. The frictional force of the commercial vehicle equates to the centripetal force of the commercial vehicle. An advantage of determining the frictional force avoid fishtailing or jack knifing when the motor vehicle is travelling at high speed, along a curved path. Optionally, a radius of a turning curve of the motor vehicle may be monitored using a steering angle sensor.

Optionally, in response to determining a load condition of the motor vehicle has reached a pre-determined load limit, a notification may be issued to warn an operator a maximum load limit has reached.

Thus, it can be seen that a vehicle load regulating system and method having the advantage of providing a feedback mechanism based upon a set of parameters measurable by at least one sensing module has been provided. A main advantage of the vehicle load regulating system and method is to prevent vehicle overturning due to overload, underload and/or uneven load of commercial vehicle. Further thereto, the set of parameters measured may be used to determine a frictional force of at least one tires, and a centrifugal force may be calculated based upon the set of parameters relative to the vehicle load measurable by the at least one sensing module. The effect of determining a centrifugal force achieves the objective of preventing fishtailing or jack-knifing accidents when the commercial vehicle is travelling at high speed on a curved road. While exemplary embodiments have been presented in the foregoing detailed description of the disclosure, it should be appreciated that a vast number of variation exist.

It should further be appreciated that the exemplary embodiments are only examples, and are not intended to limit the scope, applicability, operation or configuration of the disclosure in any way. Rather, the foregoing detailed description will provide those skilled in the art with a convenient road map for implementing an exemplary embodiment of the disclosure, it being understood that various changes may be made in the function and arrangement of elements and method of operation described in the exemplary embodiment without departing from the scope of the disclosure as set forth in the appended claims.

List of Reference Signs

| 100 | Vehicle load regulating system |
|---|---|
| 102 | Sensing module |
| 104 | Processing unit |
| 106 | Acceleration sensor |
| 108 | Human machine interface |
| 110 | Throttle control system |
| 112 | Anti - locking brake system (ABS) |
| 114 | Engine |
| 116 | Wheel speed sensor |
| 200a | Top view of sensing module (air-filled tube sensor) |
| 202, 202' | Pressure sensor |
| 204 | Air filled tube |
| 200b | Configuration for a floor of trailer compartment |
| 206 | Mechanical plate |
| 208 | Soft foam |
| 210 | Floor of trailer compartment |
| 212 | Load |
| V | Volume |
| CP | Contact point |
| 200d | Top view of sensing module (FSR) |
| 214 | Force sensitive resistor (FSR) mat |
| 216 | Sensing pins |
| 300a | Arrangement of sensing module comprising air-filled tube sensor |
| 302 | Trailer compartment |
| 300b | Side view of motor vehicle |
| 400 | Arrangement of sensing module comprising FSR mats |
| 500 | Side view of motor vehicle with load |
| 600 | Flowchart |
| 602 | Step of measuring onboard loading data |

(continued)

| 604 | Transmitting onboard loading data to motor vehicle load system |
| --- | --- |
| 606 | Receiving onboard loading data measured |
| 608 | Determining centrifugal force |
| 610 | Executing feedback mechanism to regulate motion of motor vehicle |

**Claims**

1. A method (600) of regulating a vehicle load of a motor vehicle, the method comprising:

   measuring (602), by way of a sensing module (102), an onboard loading data of a motor vehicle;
   transmitting (604), by way of a vehicle bus, the onboard loading data measured to a processing unit of a motor vehicle load regulating system;
   receiving (606), by way of a processing unit (104), the onboard loading data measured; and
   determining (608), by way of a processing unit (104), a centrifugal force of a motor vehicle relative to the onboard loading data measure, **characterized by** that the method further comprises:
   executing (610), by way of the processing unit (104), a feedback mechanism for regulating a motion of a motor vehicle in response to the centrifugal force determined.

2. The method (600) according to claim 1, further comprising:
   monitoring, by way of the sensing module (102), the onboard loading data relative to a change in an amount of pressure pressing on a floor of a trailer compartment (302) of the motor vehicle.

3. The method (600) according to claim 2, further comprising:
   determining, by way of the processing unit (104), a weight of load within the trailer compartment (302) of the motor vehicle.

4. The method (600) according to claims 1 - 3, further comprising:
   monitoring, by way of the sensing module (102), the onboard loading data relative to at least two contact points pressing on the floor of the trailer compartment (302) of the motor vehicle.

5. The method (600) according to claims 1 - 4, further comprising:
   determining, by way of the processing unit (104), a location of load within the trailer compartment (302) of the motor vehicle.

6. The method (600) according to claims 1 - 5, further comprising:
   identifying, by way of the sensing module (102), a movement of load within the trailer compartment (302) of the motor vehicle.

7. The method (600) according to claims 1 - 3, wherein in response to the weight of load determined, the method further comprises:
   determining, by way of the processing unit (104), a frictional force of one or more tires of the motor vehicle.

8. The method (600) according to claims 1 - 7, further comprising:
   monitoring, by way of a steering angle sensor, a radius of a turning curve of the motor vehicle.

9. The method (600) according to any one of the preceding claims, further comprising:
   notifying, by way of a human-machine-interface module (108), an operator of a load condition of the motor vehicle in response to measurement of load reaching a pre-determined load limit.

10. The method (600) according to any one of the preceding claims, wherein the feedback mechanism comprises:

    the weight of load within the trailer compartment (302) determined by the processing unit (104);
    the location of load within the trailer compartment (302) determined by the processing unit (104);

the movement of the load within the trailer compartment (302) determined by the processing unit (104);
the frictional force of one or more tires of the motor vehicle; and
the radius of a turning curve of the motor vehicle.

11. The method (600) according to any one of the preceding claims, wherein regulating the motion of a motor vehicle in response to the centrifugal force ($f_C$) determined further comprises:

transmitting, by way of the processing unit (104), the feedback mechanism to an anti-lock braking system (112);
transmitting, by way of the processing unit (104), the feedback mechanism to a throttle control system (110),

or combination thereof.

12. A motor vehicle load regulating system (100) comprising:

a sensing module (102) operable to measure an onboard loading data of a motor vehicle; and
a processing unit (104) comprising:
an algorithm operable to determine a centrifugal force ($f_C$) of a
motor vehicle using the onboard loading data measured, **characterized in that**:
the processing unit (104) is further operable to execute a feedback mechanism to a vehicle load regulating system (100) to regulate a motion of a motor vehicle.

13. The system (100) according to claim 12, wherein
the sensing module (102) comprises at least one pressure sensor.

14. The system (100) according to claim 13, wherein
the at least one pressure sensor is an air-filled tube sensor (200a).

15. The system (100) according to claim 13, wherein
the at least one pressure sensor is a force sensitive resistor (FSR) mat (214).

16. The system (100) according to claims 12 to 15, wherein
the sensing module (102) is embedded within a floor (210) of a trailer compartment (302).

17. The system (100) according to claim 12, wherein the onboard loading data comprises:

a change in an amount of pressure pressing on a floor (210) of a trailer compartment (302) of the motor vehicle;
at least two contact points pressing on the floor (210) of the trailer compartment (302) of the motor vehicle; and
a movement of load within the trailer compartment (302) of the motor vehicle.

18. The system (100) according to any one of the preceding claims, wherein the vehicle load regulating system further comprises:

an anti-lock braking system (112);
a throttle control system (110),

or combination thereof.

19. A computer program comprising instructions to cause the system of claims 12 to 18 to execute the steps of claims 1 to 11.

20. A computer-readable medium having stored thereon the computer program of claim 20.

100

**FIG. 1**

**200a**

202    204    202'

**FIG. 2a**

**200b**

206    208

202    204    210

**FIG. 2b**

**200c**

FIG. 2c

**200d**

FIG. 2d

**300a**

302

304

200a,b,c

202a,b,c'

202a,b,c"

**FIG. 3a**

**300b**

302

212

200a-c'

**FIG. 3b**

**400**

**FIG. 4**

**500**

**FIG. 5**

**600**

**FIG. 6**

Europäisches
Patentamt

European
Patent Office

Office européen
des brevets

# EUROPEAN SEARCH REPORT

Application Number

EP 23 18 7721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/324811 A1 (OKEYA RYOTA [JP] ET AL) 15 October 2020 (2020-10-15) * paragraph [0013] * * figures 2-3 * * paragraphs [0028], [0039], [0044] - [0048] * | 1-20 | INV. B60G17/016 G01G19/08 |
| X | CN 112 238 854 A (CUMMINS INC) 19 January 2021 (2021-01-19) * paragraphs [0008], [0102], [0106] - [0107], [0140] - [0141] * * figures 2, 3, 6A * | 1,12,19, 20 | |
| A | DE 10 2017 114214 A1 (BROSE FAHRZEUGTEILE [DE]) 27 December 2018 (2018-12-27) * abstract * * paragraphs [0006], [0008] - [0009], [0015], [0032], [0039] * | 2-6,16 | |
| A | EP 3 709 240 A1 (FORD GLOBAL TECH LLC [US]) 16 September 2020 (2020-09-16) * paragraphs [0011], [0044] * | 2-6,16 | TECHNICAL FIELDS SEARCHED (IPC) |
| A | DE 10 2014 009066 A1 (MANDO CORP [KR]) 3 June 2015 (2015-06-03) * paragraphs [0034], [0047] - [0048] * | 7,11,18 | B60W B60G G01G |
| A | EP 2 159 122 A2 (EFKON GERMANY GMBH [DE]) 3 March 2010 (2010-03-03) * paragraph [0063] * | 7,11,18 | |
| A | DE 10 2009 013647 A1 (CONTINENTAL AUTOMOTIVE GMBH [DE]) 23 September 2010 (2010-09-23) * paragraphs [0011], [0013] * | 8 | |

The present search report has been drawn up for all claims

| Place of search | Date of completion of the search | Examiner |
|---|---|---|
| The Hague | 30 November 2023 | Schmidt, Nico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 7721

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| US 2020324811 | A1 | 15-10-2020 | CN 111372835 A | | 03-07-2020 |
| | | | DE 112018005265 T5 | | 25-06-2020 |
| | | | JP 7081117 B2 | | 07-06-2022 |
| | | | JP 2019084902 A | | 06-06-2019 |
| | | | US 2020324811 A1 | | 15-10-2020 |
| | | | WO 2019088278 A1 | | 09-05-2019 |
| CN 112238854 | A | 19-01-2021 | NONE | | |
| DE 102017114214 | A1 | 27-12-2018 | NONE | | |
| EP 3709240 | A1 | 16-09-2020 | CN 111693128 A | | 22-09-2020 |
| | | | EP 3709240 A1 | | 16-09-2020 |
| | | | GB 2582168 A | | 16-09-2020 |
| | | | US 2020292375 A1 | | 17-09-2020 |
| DE 102014009066 | A1 | 03-06-2015 | CN 104670208 A | | 03-06-2015 |
| | | | DE 102014009066 A1 | | 03-06-2015 |
| | | | KR 20150062490 A | | 08-06-2015 |
| | | | US 2015151756 A1 | | 04-06-2015 |
| EP 2159122 | A2 | 03-03-2010 | AT 507033 A1 | | 15-01-2010 |
| | | | AT E529312 T1 | | 15-11-2011 |
| | | | EP 2159122 A2 | | 03-03-2010 |
| DE 102009013647 | A1 | 23-09-2010 | NONE | | |

For more details about this annex : see Official Journal of the European Patent Office, No. 12/82